# EUROPÄISCHE PATENTANMELDUNG

(11) **EP 2 166 277 A1**
(43) Veröffentlichungstag der Anmeldung: **24.03.2010**
(21) Anmeldenummer: 09008231.4
(22) Anmeldetag: 24.06.2009
(51) Int. Cl.: F21S 8/00, F21S 8/08, F21V 19/02

(54) **Beleuchtungsvorrichtung**

(30) Priorität: 17.09.2008 DE 202008012394 U
(71) Anmelder: Stadtfeld Elektrotechnische Fabrik GmbH & Co. KG, 42499 Hückeswagen (DE)
(72) Erfinder:
(74) Vertreter: von dem Borne, Andreas

(57) **Zusammenfassung**

Es handelt sich um eine Beleuchtungsvorrichtung (1), insbesondere netzunabhängige Beleuchtungsvorrichtung, für z. B. Wege, Straßen oder dergleichen Beleuchtungsbereiche, mit zumindest einem Mast (2), zumindest einer an dem Mast befestigten und vorzugsweise ausrichtbaren Solareinheit (3) mit einer oder mehreren Solarzellen (4) für die Umwandlung von Sonnenenergie in elektrische Energie, zumindest einem Energiespeicher für die Speicherung der erzeugten elektrischen Energie, und zumindest einer an dem Mast (2) oder an der Solareinheit (3) befestigten und vorzugsweise ausrichtbaren Beleuchtungseinheit (5) mit mehreren Leuchtmitteln (6) für die Ausleuchtung des Beleuchtungsbereiches, wobei die Beleuchtungseinheit (5) zumindest einen Leuchtmittelträger (7) aufweist, an welchem die Leuchtmittel (6) befestigt sind. Diese Beleuchtungsvorrichtung ist **dadurch gekennzeichnet, dass** der Leuchtmittelträger mehrere schwenkbar miteinander verbundene Trägerabschnitte aufweist, an welchen jeweils ein oder mehrere Leuchtmittel angeordnet sind.

## Beschreibung

Die Erfindung betrifft eine Beleuchtungsvorrichtung, insbesondere eine netzunabhängige Beleuchtungsvorrichtung, für die Beleuchtung von z. B. Wegen, Straßen oder dergleichen Beleuchtungsbereichen, mit
- zumindest einem Mast,
- zumindest einer an dem Mast befestigten und vorzugsweise ausrichtbaren Solareinheit mit einer oder mehreren Solarzellen für die Umwandlung von Sonnenenergie in elektrische Energie,
- zumindest einem Energiespeicher für die Speicherung der erzeugten elektrischen Energie,
- und zumindest einer an dem Mast oder an der Solareinheit befestigten und vorzugsweise ausrichtbaren Beleuchtungseinheit mit mehreren Leuchtmitteln, z. B. Leuchtdioden, für die Ausleuchtung des Beleuchtungsbereiches,
wobei die Beleuchtungseinheit zumindest einen Leuchtmittelträger aufweist, an welchem die Leuchtmittel befestigt sind. Der Leuchtmittelträger kann dabei vorzugsweise im Wesentlichen U-förmig oder bogenförmig mit einer konvex gewölbten Außenfläche ausgebildet sein. Außenfläche meint die dem Beleuchtungsbereich zugewandte Fläche.

Eine solche Beleuchtungsvorrichtung mit Solareinheit einerseits und Beleuchtungseinheit mit Leuchtmittelträger andererseits ist aus der Praxis bekannt. Durch eine U-förmige Ausgestaltung des Leuchtmittelträgers, in welchen eine Mehrzahl von Leuchtdioden integriert sind, gelingt eine streifenförmige Ausleuchtung von z. B. Wegen, Straßen oder dergleichen, so dass die Beleuchtungsvorrichtung insgesamt sehr energieeffizient arbeitet. Bei der insoweit bekannten Ausführungsform sind die Leuchtdioden unmittelbar in den Leuchtmittelträger bzw. in entsprechende Ausnehmungen des Leuchtmittelträgers integriert. Die Abstrahlungscharakteristik wird im Zuge der Konstruktion des Leuchtmittelträgers an den konkreten Einsatzzweck angepasst.

Ferner ist aus der Praxis eine Beleuchtungsvorrichtung für Straßen oder Wege mit einem an einem Mast befestigten oder befestigbaren Leuchtmittelträger bekannt, wobei der Leuchtmittelträger als Leuchtmodulträger ausgebildet ist, an welchen mehrere Leuchtmodule befestigt sind. In den Leuchtmodulen sind jeweils mehrere Leuchtdioden angeordnet und die einzelnen Leuchtmodule sind unabhängig voneinander an dem Leuchtmittelträger montierbar. Dabei sind ein oder mehrere Leuchtmodule variabel an dem Leuchtmodulträger positionierbar, beispielsweise an dem Leuchtmodulträger verschiebbar angeordnet. Die einzelnen Leuchtdioden bzw. einige der Leuchtdioden sind in den Leuchtmodulen auf drehbaren Wellen angeordnet, um den Abstrahlwinkel einzustellen. Der Leuchtmodulträger ist als vieleckiger Träger mit einer Mehrzahl von jeweils im Wesentlichen geraden Anlageflächen für die Leuchtmodule ausgebildet, so dass die einzelnen Leuchtmodule an den geraden Anlageflächen verschiebbar befestigt sind.

Die aus der Praxis insoweit bekannten Beleuchtungsvorrichtungen sind insbesondere hinsichtlich Fertigungs- und Montagekosten sowie Witterungsbeständigkeit weiterentwicklungsfähig. - Hier setzt die Erfindung ein.

Der Erfindung liegt die Aufgabe zugrunde, eine Beleuchtungsvorrichtung, insbesondere netzunabhängige Beleuchtungsvorrichtung, der eingangs beschriebenen Art zu schaffen, welche sich durch einen kostengünstigen und witterungsbeständigen Aufbau sowie variable Einsatzmöglichkeit auszeichnet.

Zur Lösung dieser Aufgabe lehrt die Erfindung bei einer gattungsgemäßen Beleuchtungsvorrichtung der eingangs beschriebenen Art, dass der Leuchtmittelträger mehrere schwenkbar miteinander verbundene Trägerabschnitte aufweist, an welchen jeweils ein oder mehrere Leuchtmittel angeordnet sind. Der aus mehreren schwenkbar miteinander verbundenen Trägerabschnitten zusammengesetzte Leuchtmittelträger ist dabei in an sich bekannter Weise im Wesentlichen U-förmig oder bogenförmig mit einer konvex gewölbten Außenfläche ausgebildet. Die Leuchtmittel sind vorzugsweise als Leuchtdioden ausgebildet.

Die Erfindung geht dabei von der Erkenntnis aus, dass sich eine Beleuchtungseinheit mit einem derartigen Leuchtmittelträger kostengünstig und einfach montieren und insbesondere auch an die gewünschten Gegebenheiten anpassen lässt. Dieses gelingt im Rahmen der Erfindung dadurch, dass der Leuchtmittelträger nicht als starres Gebilde mit fest vorgegebener Form und folglich auch fest vorgegebener Außenfläche ausgebildet ist, sondern aus mehreren schwenkbar miteinander verbundenen Trägerabschnitten zusammengesetzt ist. An den einzelnen Trägerabschnitten oder an einigen der Trägerabschnitte sind jeweils ein oder mehrere Leuchtmittel montiert. Besonders bevorzugt sind die Leuchtmittel bzw. Leuchtdioden nicht unmittelbar an den Trägerabschnitten montiert, sondern in Leuchtmodulen angeordnet. Die Erfindung schlägt in einer bevorzugten Ausführungsform vor, dass an den Trägerabschnitt oder einigen Trägerabschnitten jeweils zumindest ein Leuchtmodul befestigt ist, welches ein oder mehrere Leuchtmittel, z. B. Leuchtdioden, aufnimmt. Die Anpassung der Abstrahlcharakteristik erfolgt dabei aber nicht durch Positionierung des Leuchtmoduls an dem Leuchtmittelträger, sondern durch entsprechende Ausrichtung der einzelnen Trägerabschnitte des Leuchtmittelträgers, da diese schwenkbar miteinander verbunden sind. Besonders bevorzugt sind die jeweils paarweise benachbarten Trägerabschnitte, kettenartig über Verbindungsflaschen schwenkbar miteinander verbunden. Die Trägerabschnitte bilden gleichsam einzelne Kettenglieder, welche über Verbindungslaschen beweglich miteinander verbunden sind. Die Arretierung und folglich die Einstellung eines bestimmten Winkels erfolgt dann vorzugsweise über Befestigungsschrauben, wobei diese Befestigungsschrauben zugleich auch die Schwenkgelenke bilden können. Ergänzend können Arretierungsschrauben, z. B. in Form von Madenschrauben vorgesehen sein. Durch diesen Aufbau der Träger aus mehreren (separaten) Trägerabschnitten, gelingt insbesondere eine individuelle Anpassung der Leuchtengeometrie an die individuellen örtlichen Gegebenheiten. Diese Anpassung kann ggf. auch vor Ort beim Aufbau der Leuchte vorgenommen oder verändert werden. Vorzugsweise erfolgt die Anpassung jedoch bei der Montage in der Fertigung.

Nach einem weiteren Vorschlag ist vorgesehen, dass der Leuchtmittelträger zumindest einen (zentralen) Befestigungsabschnitt aufweist, welcher ein Befestigungsaggregat bildet und vorzugsweise einstellbar an dem Mast und/oder der Solareinheit befestigt ist, wobei an dem Befestigungsabschnitt dann beidseitig jeweils zumindest ein Trägerabschnitt (als gleichsam Kettenglied) schwenkbar angeschlossen ist. Der Befestigungsabschnitt dient folglich der Ankopplung der Beleuchtungseinheit an den Mast und/oder die Solareinheit und an diesen Befestigungsabschnitt sind dann vorzugsweise beidseitig die Trägerabschnitte einstellbar angeschlossen. Weiter ist vorgesehen, dass in die Trägerabschnitte und/oder in den Befestigungsabschnitt und/oder in die Verbindungslaschen jeweils eine oder mehrere Durchbrechungen als Kabeldurchgänge integriert sind. Die Anschlusskabel für die Leuchtmodule lassen sich folglich geschützt im Innern der Trägerabschnitte bzw. Befestigungsabschnitte sowie ggf. Verbindungslaschen führen, so dass die Anordnung insgesamt witterungsbeständig ist. Dieses wird vorzugsweise auch dadurch erreicht, dass die Leuchtmodule ein kastenförmiges und frontseitig offenes Modulgehäuse aufweisen, welches mit einer transparenten Abdeckung frontseitig verschlossen ist, wobei die Leuchtmittel, z. B. Leuchtdioden, im Innern des Modulgehäuses angeordnet sind. Die Leuchtmittel sind folglich gekapselt in verschlossenen Leuchtmodulen angeordnet.

Bevorzugt sind die Leuchtmittel, und besonders bevorzugt sämtliche Leuchtmittel, z. B. Leuchtdioden, in dem Modulgehäuse schwenkbar um eine Schwenkachse angeordnet, welche quer zu der Schwenkachse bzw. den Schwenkachsen der Trägerabschnitte verläuft. Während durch Verschwenken der einzelnen Trägerabschnitte folglich die Ausleuchtung eines Beleuchtungsbereiches, z. B. eines Weges, in der Längsrichtung eingestellt werden kann, gelingt durch Verschwenken der einzelnen Leuchtdioden eine Einstellung der Ausleuchtung in Querrichtung. Insgesamt gelingt eine sehr flexible Anpassung der Ausleuchtung, wobei die Anpassung z. B. ab Werk bei der Fertigung erfolgen kann, und zwar unter Berücksichtigung der individuellen örtlichen Gegebenheiten.

Die Einstellbarkeit der Leuchtdioden innerhalb der Modulgehäuse lässt sich konstruktiv besonders einfach realisieren, wenn die Leuchtmittel, z. B. Leuchtdioden an Tragplatten befestigt sind, welche schwenkbar um eine Schwenkachse in dem Modulgehäuse angeordnet sind. Die Tragplatten können beispielsweise über Befestigungselemente, z. B. Befestigungswinkel in dem Modulgehäuse befestigt werden, wobei die Tragplatten dann schwenkbar an das Befestigungselement, z. B. im Befestigungswinkel angeschlossen sind.

Nach einem weiteren Vorschlag ist vorgesehen, dass in dem Modulgehäuse bzw. in jedem Modulgehäuse jeweils eine Steuerplatine angeordnet ist, an welche vorzugsweise sämtliche Leuchtmittel, z. B. Leuchtdioden, eines Moduls angeschlossen sind. Eine solche sehr flach bauende Steuerplatine bzw. Treiberplatine kann beispielsweise auf dem Gehäusegrund bzw. Gehäuseboden befestigt, z. B. aufgeklebt werden. Um einen einfachen und witterungsbeständigen elektrischen Anschluss zu gewährleisten, schlägt die Erfindung vor, dass durch die Gehäusewandung der Module, vorzugsweise durch die Gehäuserückwand eine oder mehrere elektrische Anschlüsse hindurchgeführt sind. Diese durchgeführten elektrischen Anschlüsse sind im Gehäuseinnem vorzugsweise durch eine Anschlussplatine miteinander verbunden. Auf der rückseitigen Gehäuseaußenseite ragen dann die Anschlüsse als z. B. Anschlussstecker aus dem Gehäuse heraus. Die Stecker sind folglich in die Gehäuserückseite integriert.

Die Trägerabschnitte, Befestigungsabschnitte, Verbindungslaschen und/oder die Modulgehäuse sind vorzugsweise aus Metall, besonders bevorzugt aus Aluminium gefertigt. Auf diese Weise gelingt eine besonders gute Wärmeableitung. Die frontseitige Abdeckung aus z. B. transparentem Kunststoff wird nach einem weiteren Vorschlag der Erfindung mit einem Halterahmen befestigt, und zwar vorzugsweise unter Zwischenschaltung einer Dichtung, z. B. einer Gummidichtung. Der Halterahmen kann ebenfalls aus Metall, z. B. aus Aluminium gefertigt sein. Die Befestigung gelingt dann vorzugsweise mittels mehrerer Schrauben, so dass das Modul insgesamt dicht verschlossen und folglich witterungsbeständig ist.

Im Folgenden wird die Erfindung anhand einer lediglich ein Ausführungsbeispiel darstellenden Zeichnung näher erläutert. Es zeigen
- Fig. 1: eine erfindungsgemäße Beleuchtungsvorrichtung in einer perspektivischen Ansicht (Ausschnitt),
- Fig. 2: eine Beleuchtungseinheit mit Leuchtmittelträger des Gegenstandes nach Fig. 1,
- Fig. 3: einen Ausschnitt aus dem Gegenstand nach Fig. 2,
- Fig. 4a, 4b, 4c, 4d: ein Beleuchtungsmodul in verschiedenen Montageschritten,

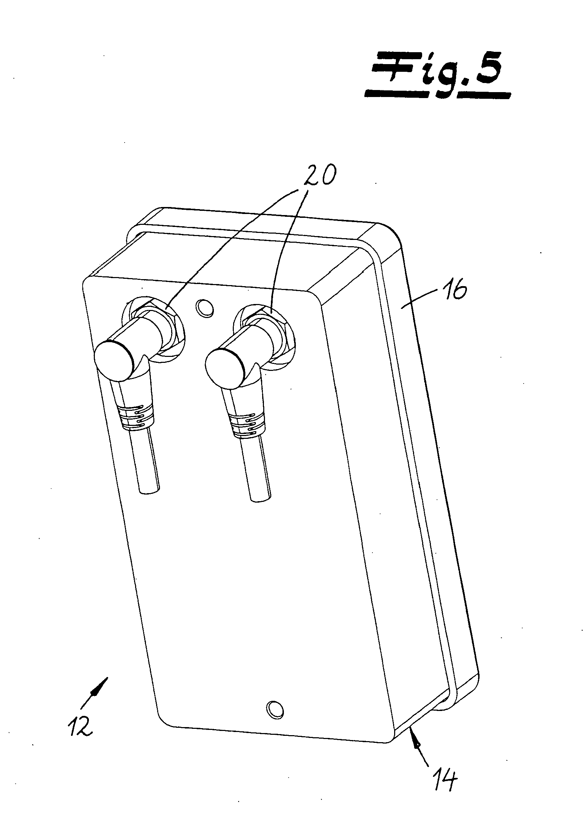

- Fig. 5: den Gegenstand nach Fig. 4 in einer anderen Ansicht.

In den Figuren ist eine netzunabhängige Beleuchtungsvorrichtung 1 dargestellt, die insbesondere der gleichmäßigen Ausleuchtung von Wegen, Straßen oder dergleichen Beleuchtungsbereichen dient. Diese Beleuchtungsvorrichtung 1 weist in ihrem grundsätzlichen Aufbau einen Mast 2 auf, welcher im Ausführungsbeispiel im Wesentlichen vertikal an einem zu beleuchtenden und nicht dargestellten Weg positioniert ist. Der Mast kann z. B. eine Höhe von 3 bis 6 m aufweisen. An dem Mast 2 ist eine Solareinheit 3 ausrichtbar befestigt,
wobei diese Solareinheit 3 als Solarpanel mit mehreren Solarzellen 4 ausgebildet ist. Das Solarpanel ist unter einem fest vorgegebenen Winkel auf den Mast aufgesetzt, jedoch um die Mastachse drehbar. Ferner weist die Beleuchtungsvorrichtung 1 zumindest einen Energiespeicher, z. B. einen Akku für die Speicherung der erzeugten elektrischen Energie auf. Dieser kann beispielsweise im Mast angeordnet sein. Er ist in den Figuren nicht dargestellt. Schließlich weist die Beleuchtungsvorrichtung 1 eine an dem Mast 2 ausrichtbar befestigte Beleuchtungseinheit 5 mit mehreren Leuchtmitteln 6 für die Ausleuchtung des Beleuchtungsbereichs auf.

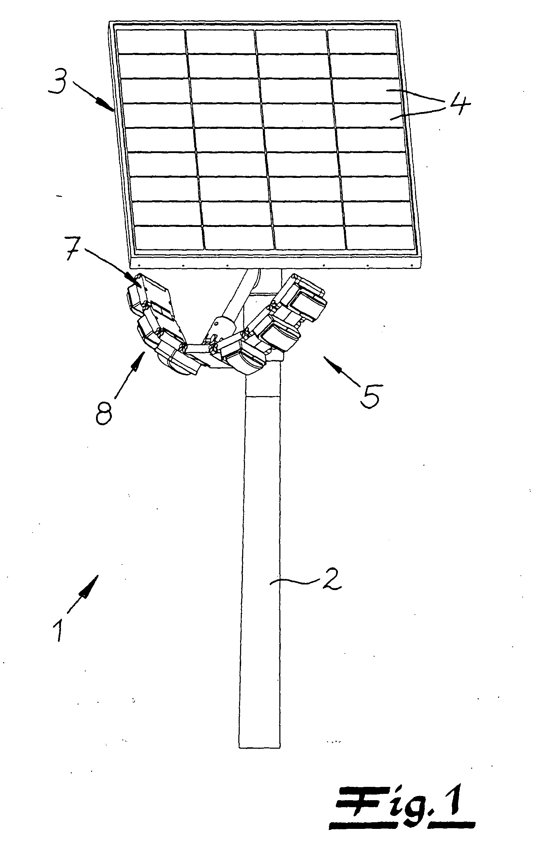

In Fig. 1 ist erkennbar, dass die unterhalb des Solarpanels 3 angeordnete Beleuchtungseinheit 5 einen Leuchtmittelträger 7 aufweist, welcher U-förmig bzw. bogenförmig mit einer konvex gewölbten Außenfläche 8 ausgebildet ist. Außenfläche des Leuchtmittelträgers 7 meint die dem zu beleuchtenden Weg zugewandte Fläche. Diese U-förmige bzw. bogenförmige Ausgestaltung des Leuchtmittelträgers 7 ermöglicht in an sich bekannter Weise eine effiziente Ausleuchtung eines streifenförmigen Beleuchtungsbereiches, z. B. eines Weges oder einer Straße.

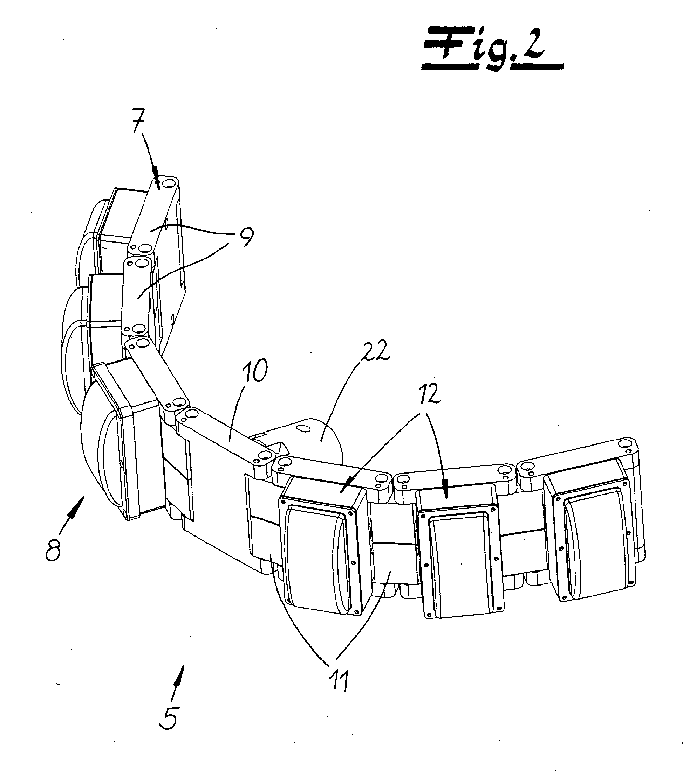

Erfindungsgemäß weist der Leuchtmittelträger 7 nun mehrere schwenkbar miteinander verbundene Trägerabschnitte 9 bzw. Trägerelemente auf, an welchen jeweils ein oder mehrere Leuchtdioden 6 angeordnet sind. Die Leuchtdioden 6 sind dabei nicht unmittelbar an dem Leuchtmittelträger 7 bzw. an den Trägerabschnitten 9 befestigt, sondern in Leuchtmodulen 12 angeordnet, wobei an jedem Trägerabschnitt 9 ein Leuchtmodul 12 befestigt ist und
wobei in jedem Leuchtmodul 12 mehrere (z. B. zwei) Leuchtdioden 6 angeordnet sind. Insbesondere Fig. 2 zeigt, dass jeweils paarweise benachbarte Trägerabschnitte 9 kettenartig über Verbindungslaschen 11 miteinander verbunden sind. Insgesamt gelingt durch die schwenkbare Verbindung zwischen den einzelnen Trägerabschnitten 9 eine optimale Anpassung der gewünschten Ausleuchtung, wobei durch Verschwenken der einzelnen Trägerabschnitte 9 insbesondere die Abstrahlcharakteristik entlang der Längsrichtung des auszuleuchtenden Weges eingestellt werden kann. Eine Verschiebung oder sonstige Positionierung der Leuchtmodule 12 an dem Leuchtmittelträger 7 ist im Rahmen der Erfindung nicht vorgesehen.

Ergänzend zu den Trägerabschnitten 9 weist der Leuchtmittelträger 7 einen zentralen Befestigungsabschnitt 10 (als Befestigungselement) auf, welcher ebenfalls über Verbindungslaschen 11 schwenkbar mit den beiden jeweils benachbarten Trägerabschnitten 9 verbunden ist. Über den zentralen Befestigungsabschnitt 10 erfolgt folglich die Ankopplung des Leuchtmittelträgers 7 an den Mast 2, wobei dann an diesen Befestigungsabschnitt 10 jeweils beidseitig die Trägerabschnitte 9 sukzessive schwenkbar angeschlossen sind. Der Befestigungsabschnitt 10 ist dabei rückseitig mit einem Befestigungsstutzen 22 verbunden welcher als Rohrstück oder Rohrstutzen ausgebildet sein kann. Der Befestigungsabschnitt 10 kann dabei beweglich, z. B. schwenkbar und/oder drehbar an diesem Rohrabschnitt 22 angeschlossen sein. Einzelheiten sind in den Figuren nicht dargestellt.

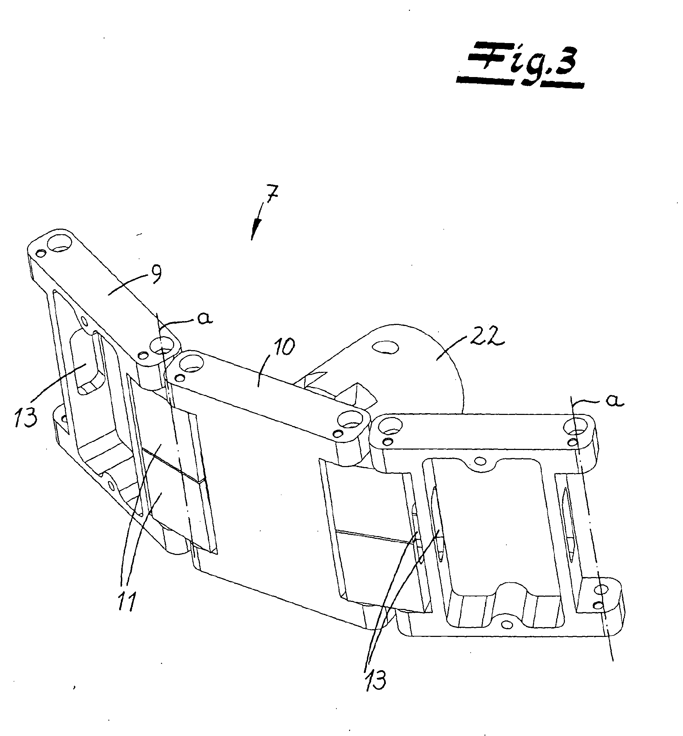

Der Aufbau der Trägerabschnitte 9 und des Befestigungsabschnittes 10 ist insbesondere in Fig. 3 dargestellt, welche lediglich einen teilmontierten Leuchtmittelträger zeigt. Insbesondere ist in Fig. 3 erkennbar, dass die Trägerabschnitte 9, der Befestigungsabschnitt 10 und auch die Verbindungslaschen 11 mit Durchbrechungen 13 ausgerüstet sind, welche gemeinsam einen Kabelkanal bilden. In das Innere des Leuchtmittelträgers 7 ist auf diese Weise folglich ein Kabelkanal integriert, so dass eine einfache und witterungsbeständige Verkabelung der Leuchtmodule gelingt.

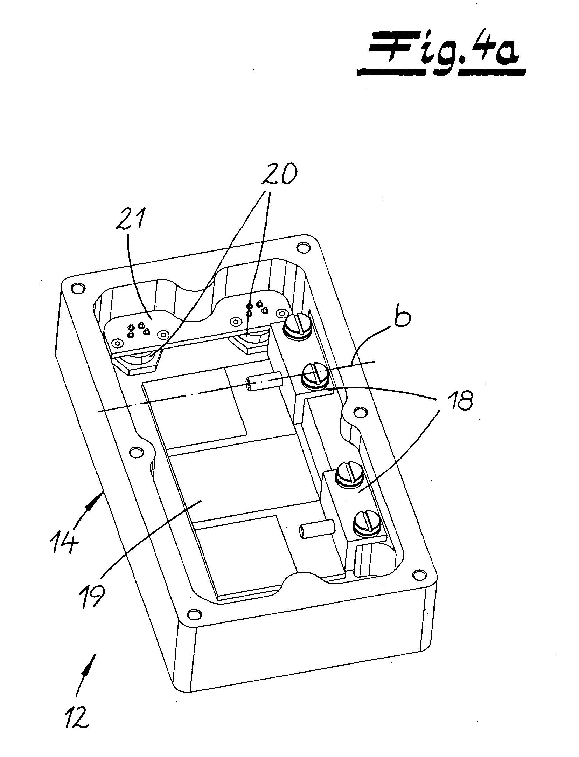

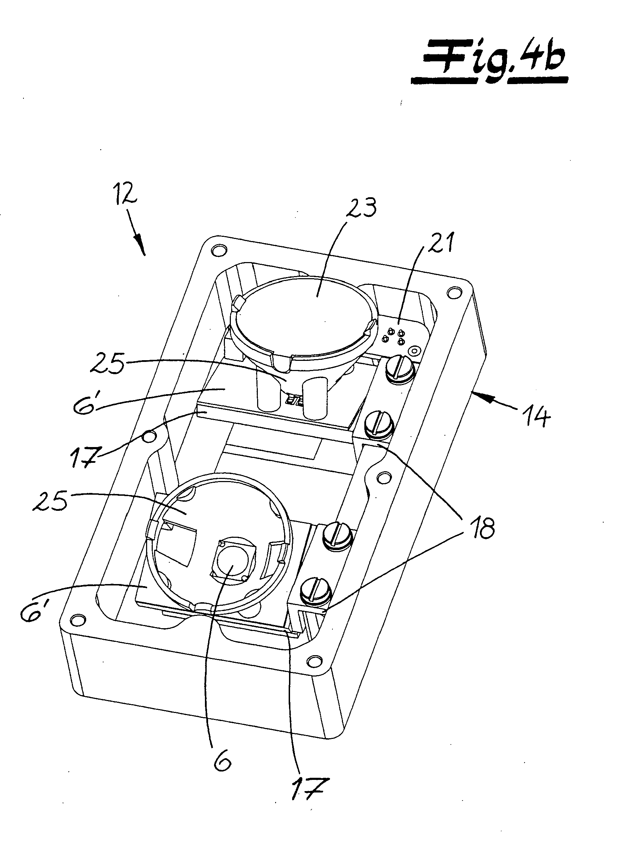

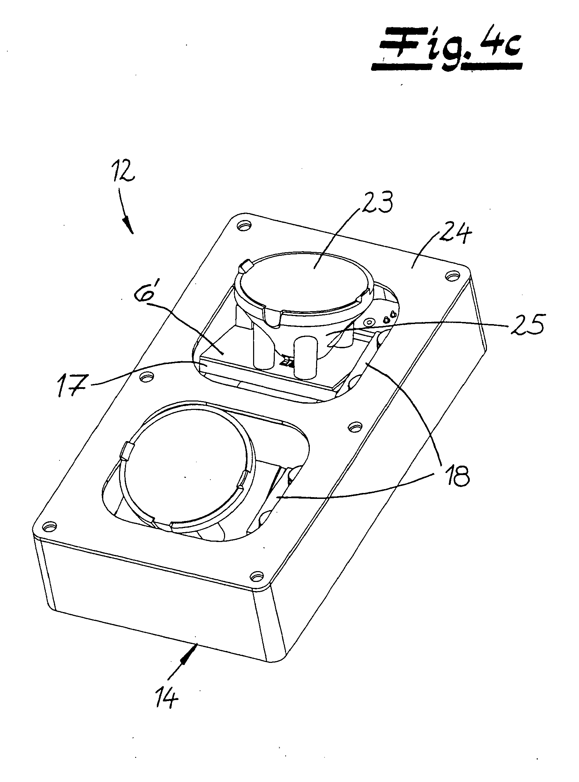

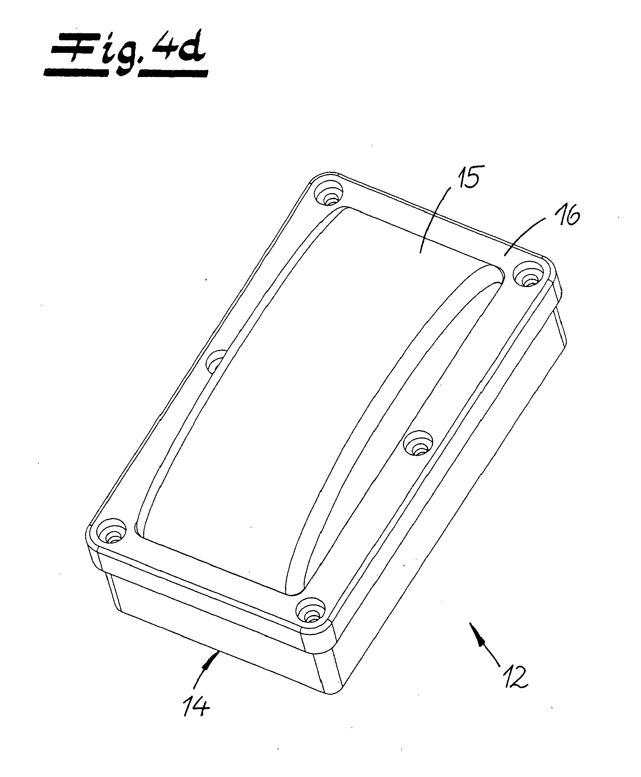

Der Aufbau der Leuchtmodule 12 ist insbesondere anhand einer vergleichenden Betrachtung der Fig. 4a, 4b, 4c und 4d erkennbar, welche ein Leuchtmodul in unterschiedlichen Montageschritten zeigt. Das Leuchtmodul 12 weist ein kastenförmiges und frontseitig offenes Modulgehäuse 14 auf, welches mit einer transparenten Abdeckung 15 verschlossen ist. Die Leuchtdioden 6 sind innerhalb des Modulgehäuses 14 schwenkbar um jeweils eine Schwenkachse b angeordnet, welche quer zu der Schwenkachse a bzw. den Schwenkachsen a der jeweiligen Trägerabschnitte 9 verläuft. Dazu sind die Leuchtdioden 6 an Tragplatten 17 befestigt, welche schwenkbar in dem Modulgehäuse 14 angeordnet sind. Die Tragplatten 17 können drehbar an Befestigungselementen, nämlich Befestigungswinkeln 18 angelenkt sein, wobei diese Befestigungswinkel 18 mittels Schrauben im Innern des Modulgehäuses 14 fixiert werden. Die Leuchtdioden sind folglich ausrichtbar, so dass durch geeignete Winkeleinstellung die Ausleuchtung quer zu der Längsrichtung des Beleuchtungsbereiches, z. B. Weges optimiert werden kann. Dazu ist vorzugsweise vorgesehen, dass die Leuchtdioden jeweils in oder im Bereich von schirmartigen Aufnahmekammern bzw. Optikhaltern 25 angeordnet sind. Diese Optikhalter können optische Elemente aufnehmen, z. B. Linsen 23, Streuscheiben, Reflektoren oder dergleichen. Die Optikhalter 25 können unterseitig auf den Tragplatten 17 befestigt sein. Im Ausführungsbeispiel sind die Optikhalter 25 auf den keramischen LED-Platinen 6' befestigt, auf welchen die LEDs 6 angeordnet sind. Die LED-Platine 6' ist wiederum auf der Tragplatte 17 befestigt, z. B. verklebt. Die keramischen LED-Platinen 6' sowie das z. B. zum Verkleben verwendete wärmeleitende doppelseitige Klebeband dienen der besseren Entwärmung der LED 6 und somit der Effizienzsteigerung im Vergleich zu herkömmlichen LED-Platinen.

Ferner ist in Fig. 4a erkennbar, dass im Innern des Modulgehäuses 14, eine Steuerplatine 19 angeordnet ist, welche vorzugsweise auf dem Boden des Modulgehäuses befestigt, z. B. verklebt ist. Dabei ist für sämtliche Leuchtdioden eines Modulgehäuses eine einzige Steuerplatine bzw. Treiberplatine 19 vorgesehen. In die Gehäusewandung z. B. in die rückseitige Gehäusewand sind Anschlussstecker 20 integriert, so dass insgesamt eine feuchtigkeitsgeschützte Verkabelung realisiert ist. Die Anschlussstecker 20 sind über eine gemeinsame Steckerplatine 21 im Gehäuseinnern verbunden.

Eine vergleichende Betrachtung der Fig. 4c und 4d macht deutlich, dass die transparente Abdeckung 15 mittels eines Halterahmens 16 unter Zwischenschaltung einer Dichtung 24 verschlossen wird, und zwar mittels mehrerer Schrauben.

Das Modulgehäuse selbst ist - wie auch der Halterahmen - aus Aluminium gefertigt, um eine optimale Wärmeableitung zu gewährleisten.

Nicht dargestellt ist in den Figuren, dass die Beleuchtungsvorrichtung, z. B. innerhalb des Mastes eine Steuervorrichtung enthält, welche mit dem Akku sowie ggf. einem integrierten Laderegler für den Akku verbunden ist. Über die Leuchtensteuerung können die LED's auch mit einem Signal dimmbar sein. Der Kontroller der Steuerung übernimmt auch die Laderegelung des Akkus sowie die Abschaltung der Leuchte, wenn der Akku leer ist.

Ferner kann die Beleuchtungsvorrichtung mit Dämmerungsschaltern, Timern oder dergleichen Steuermitteln ausgestattet sein, so dass ein Ein- und Ausschalten der Leuchte über Dämmerungsschalter oder auch über einen Timer erfolgen kann. Ein- und Ausschalten kann auch über eine Funkuhr geregelt werden. Einzelne Kombinationen dieser Möglichkeiten sind ebenfalls denkbar.

## Patentansprüche

1. Beleuchtungsvorrichtung (1), insbesondere netzunabhängige Beleuchtungsvorrichtung, für z. B. Wege, Straßen oder dergleichen Beleuchtungsbereiche, mit
- zumindest einem Mast (2),
- zumindest einer an dem Mast befestigten und vorzugsweise ausrichtbaren Solareinheit (3) mit einer oder mehreren Solarzellen (4) für die Umwandlung von Sonnenenergie in elektrische Energie,
- zumindest einem Energiespeicher für die Speicherung der erzeugten elektrischen Energie,
- und zumindest einer an dem Mast (2) oder an der Solareinheit (3) befestigten und vorzugsweise ausrichtbaren Beleuchtungseinheit (5) mit mehreren Leuchtmitteln (6) für die Ausleuchtung des Beleuchtungsbereiches,
wobei die Beleuchtungseinheit (5) zumindest einen Leuchtmittelträger (7) aufweist, an welchem die Leuchtmittel (6) befestigt sind **dadurch gekenzeichnet,**
**dass** der Leuchtmittelträger (7) mehrere schwenkbar miteinander verbundene Trägerabschnitte (9) aufweist, an welchen jeweils ein oder mehrere Leuchtmittel (6) angeordnet sind.

2. Vorrichtung nach Anspruch 1, **dadurch gekennzeichnet, dass** der aus mehreren schwenkbar miteinander verbundenen Trägerabschnitten (9) zusammengesetzte Leuchtmittelträger (7) im Wesentlichen U-förmig oder bogenförmig mit einer konvex gewölbten Außenfläche (8) ausgebildet ist.

3. Vorrichtung nach Anspruch 1 oder 2, **dadurch gekennzeichnet, dass** die Leuchtmittel (6) als Leuchtdioden ausgebildet sind.

4. Vorrichtung nach einem der Ansprüche 1 bis 3, **dadurch gekennzeichnet, dass** an den Trägerabschnitten (9) oder an einigen Trägerabschnitten (9) jeweils zumindest ein Leuchtmodul (12) befestigt ist, welches ein oder mehrere Leuchtmittel (6) aufnimmt.

5. Vorrichtung nach einem der Ansprüche 1 bis 4, **dadurch gekennzeichnet, dass** jeweils paarweise benachbarte Trägerabschnitte (9) kettenartig, z. B. über Verbindungslaschen (11) schwenkbar miteinander verbunden sind.

6. Vorrichtung nach einem der Ansprüche 1 bis 5, **dadurch gekennzeichnet, dass** der Leuchtmittelträger (7) zumindest einen (zentralen) Befestigungsabschnitt (10) aufweist, welcher vorzugsweise einstellbar an dem Mast und/oder der Solareinheit befestigt ist, wobei an den Befestigungsabschnitt (10) beidseitig jeweils zumindest ein Trägerabschnitt (9) schwenkbar angeschlossen ist.

7. Vorrichtung nach einem der Ansprüche 1 bis 6, **dadurch gekennzeichnet, dass** in die Trägerabschnitte (9) und/oder den Befestigungsabschnitt (10) und/oder die Verbindungslaschen (11) Durchbrechungen (13) als Kabeldurchgänge integriert sind.

8. Vorrichtung nach einem der Ansprüche 4 bis 7, **dadurch gekennzeichnet, dass** die Leuchtmodule (12) ein kastenförmiges und frontseitig offenes Modulgehäuse (14) aufweisen, welches mit einer transparenten Abdeckung (15) verschlossen ist, wobei die Leuchtmittel (6) im Innern des Modulgehäuses (14) angeordnet sind.

9. Vorrichtung nach einem der Ansprüche 4 bis 8, **dadurch gekennzeichnet, dass** die Leuchtmittel (6) und vorzugsweise sämtliche Leuchtmittel in dem Modulgehäuse (14) schwenkbar um eine Schwenkachse (b) angeordnet sind, welche quer zu der Schwenkachse (a) der Trägerabschnitte (9) verläuft.

10. Vorrichtung nach Anspruch 9, **dadurch gekennzeichnet, dass** die Leuchtmittel (6) an schwenkbar in dem Modulgehäuse (14) angeordneten Tragplatten (17) befestigt sind.

11. Vorrichtung nach einem der Ansprüche 4 bis 10, **dadurch gekennzeichnet, dass** in dem Modulgehäuse (12) jeweils eine Steuerplatine (19) angeordnet ist, an welcher vorzugsweise sämtliche Leuchtmittel (6) des Modulgehäuses (14) angeschlossen sind.

12. Vorrichtung nach einem der Ansprüche 4 bis 11, **dadurch gekennzeichnet, dass** die transparente Abdeckung (15) mit einem vollständig umlaufenden Halterahmen (16) an dem Modulgehäuse (14) befestigt ist.

13. Vorrichtung nach einem der Ansprüche 4 bis 12, **dadurch gekennzeichnet, dass** in die Gehäusewandung, vorzugsweise in die Gehäuserückwand des Modulgehäuses (14) ein oder mehrere Anschlüsse, z. B. Anschlussstecker (20) integriert sind.
